# FASCICULE DE BREVET EUROPEEN

(11) **EP 0 716 324 B1**
(45) Date de publication et mention de la délivrance du brevet: **03.07.2002**
(21) Numéro de dépôt: 95402725.6
(22) Date de dépôt: 04.12.1995
(51) Int. Cl.: G02B 6/44

(54) **Dispostif de maintien d'au moins un câble à fibres optiques et boitier d'épissurage en faisant application**
Befestigungsvorrichtung für mindestens ein faseroptisches Kabel und vorrichtungsbezogenes Verbindungsgehäuse
Fixing device for at least one fibre optical cable and device orientated splicebox

(30) Priorité: 08.12.1994 FR 9414774
(43) Date de publication de la demande: 12.06.1996
(73) Titulaire: ALCATEL CABLE INTERFACE, 08330 Vrigne aux Bois (FR)
(72) Inventeur: Vincent, Alain, F-77230 Juilly (FR); Milanowski, Michel, F-60540 Anserville (FR)
(74) Mandataire: Feray, Valérie

(56) Documents cités:
- EP-A- 0 397 587
- DE-A- 2 621 852
- DE-C- 4 231 181
- DE-C- 4 333 067
- DE-U- 9 415 327
- FR-A- 2 682 775
- US-A- 4 359 262

## Description

La présente invention concerne les équipements d'immobilisation de câbles à fibres optiques en vue du lovage et du raccordement de leurs fibres optiques. Elle porte plus particulièrement sur un dispositif de maintien d'au moins un câble à fibres optiques et sur un boîtier d'épissurage faisant application de ce dispositif.

Les câbles sont de type connu et comportent un porteur et/ou un jonc rainuré, une pluralité de fibres autour du porteur ou dans les rainures du jonc et une gaine de protection extérieure.

Les fibres sont souvent individuellement ou par ensembles sous tubes de protection. Des moyens périphériques de renfort, par exemple sous forme de mèches fibreuses résistantes ou d'éléments relativement rigides, sont en général prévus entre les fibres et la gaine extérieure du câble.

De manière générale connue, pour le raccordement de fibres optiques d'un câble à celles d'un autre câble, ces câbles sont immobilisés et ont leurs fibres libres et en surlongueur au-delà du ou des points de maintien.

Le document FR-A-2 682 775 décrit un dispositif d'amarrage d'un câble à fibres optiques, qui maintient le câble préparé et qui ,se fixe de manière amovible dans un boîtier d'épissurage. Ce dispositif est constitué par une semelle présentant une partie arrière sur laquelle le câble gainé est immobilisé et une partie avant sur laquelle le porteur du câble dégainé est bloqué, tandis que les fibres dégagées de la périphérie du porteur sont libres et saillantes à l'avant de la semelle. Un trou prévu dans la partie terminale avant de la semelle permet la fixation à l'aide d'une vis de la semelle, avec le câble préalablement immobilisé sur celle-ci, dans le boîtier d'épissurage.

Le stockage des surlongueurs des fibres des câbles ainsi maintenu dans le boîtier et le maintien des raccords d'épissurage des fibres de ces câbles sont assurées dans le Boîtier, en général dans une ou plusieurs cassettes de lovage et d'épissurage empilées dans ce boîtier.

Le montage de chaque dispositif d'amarrage avec son câble dans le boîtier et le retrait de l'un des dispositifs en place se fait en utilisant un tournevis. L'utilisation d'un tel outil dans l'espace intérieur restreint affecté à la fixation des dispositifs d'amarrage des différents câbles peut blesser les fibres de l'un quelconque des câbles. Ces dispositifs d'amarrage fixés côte à côte dans le boîtier limitent la capacité de réception ces dispositifs sur l'espace intérieur qui leur est affecté. Ils exigent en outre qu'une étanchéité soit assurée au niveau des accès prévus à leur effet sur le boîtier, pour une protection convenable des fibres lovées et épissurées dans le boîtier.

La présente invention a pour but d'éviter de tels inconvénients en réalisant un dispositif de maintien d'un ou de plusieurs câbles, qui évite l'utilisation de tout outil à l'intérieur du boîtier lors de la mise en place ou le retrait de ce dispositif, et dans lequel est intégrée l'étanchéité de chaque câble concerné.

Elle a pour objet un dispositif de maintien d'au moins un câble à fibres optiques, comportant pour chaque câble un support d'amarrage, sur lequel le câble correspondant est immobilisé sur une face d'amarrage du support et a ses fibres libres sur une extrémité avant dudit support, caractérisé en ce qu'il comporte :
- une tubulure cylindrique, affectée au montage intérieur de chaque câble préalablement immobilisé sur son support d'amarrage et prévue de longueur sensiblement supérieure à celle de chaque support d'amarrage, dans laquelle chaque câble est reçu dans une partie terminale arrière de la tubulure et de laquelle chaque fibre sort à travers une partie terminale avant de la tubulure,
- des moyens avant de calage, assurant le positionnement et le blocage en rotation de chaque support d'amarrage dans ladite partie terminale avant de ladite tubulure,
- des moyens de fermeture de la partie arrière de la tubulure, autour de chaque câble reçu dans ladite tubulure,
- des moyens avant de fixation étanche de ladite tubulure sur un accès d'un corps de boîtier, de sorte que les fibres entrent dans le boîtier par cet accès.

Ce dispositif présente avantageusement en outre au moins l'une des caractéristiques additionnelles suivantes :
- le support d'amarrage de chaque câble est constitué par une pièce allongée présentant une grande face, échancrée axialement sur une partie de sa longueur et définissant la face d'amarrage, et plusieurs petites faces planes définissant entre elles des pans inclinés de montage accolé de plusieurs supports dans ladite tubulure ;
- le support comporte une nervure terminale avant saillante axialement sur la partie terminale avant de la face d'amarrage et percée longitudinalement d'un canal, ledit canal étant affecté au blocage d'un porteur central appartenant au câble immobilisé sur ledit support ;
- le support présente un épaulement terminal semi-circulaire avant, saillant sur ladite face d'amarrage et percé d'encoches périphériques pour le passage des fibres du câble immobilisé sur le support ;
- un patin mousse fendu est monté contre ledit épaulement ;
- les moyens de calage comportent une cale frontale en forme de barrette plate, prévue de longueur supérieure au diamètre intérieur de ladite tubulure et affectée au blocage dans l'extrémité avant de ladite tubulure d'un seul ou de deux supports accolés symétriquement l'un à l'autre, et ladite tubulure présente au moins deux encoches avant, diamétralement opposées l'une à l'autre, recevant les extrémités de ladite barrette ;
- lesdits moyens de calage comportent une cale frontale en forme de pièce plate en étoile, à trois bras radiaux prévus de longueur supérieure au rayon intérieur de la dite tubulure et affectés au blocage dans l'extrémité avant de la tubulure de trois supports accolés deux à deux, et ladite tubulure présente au moins trois encoches avant recevant les extrémités des trois bras.

L'invention a également pour objet un boîtier d'épissurage faisant application de tels dispositifs de maintien d'au moins un câble à fibres optiques et comportant un corps d'épissurage et au moins deux accès latéraux opposés sur ledit corps pour les câbles dont les fibres sont raccordées intérieurement, caractérisé en ce que chaque dispositif est extérieur au corps de boîtier.

Ce boîtier peut être de forme tubulaire et reçoit alors directement sur ses extrémités deux dispositifs de maintien de câbles à fibres optiques.

Ce boîtier est en particulier parallélépipédique et présente des accès latéraux sur chacune de ses quatre faces latérales, chaque accès recevant l'un desdits dispositifs ou étant fermé et deux des quatre faces étant utilisés pour recevoir les dispositifs selon le nombre de dispositifs à fixer sur leurs accès.

Les caractéristiques et avantages de la présente invention ressortiront de la description faite ci-après en regard des dessins ci-annexés donnés à titre d'exemples préférentiels de réalisation. Dans ces dessins :
- la figure 1 est une vue en coupe d'un dispositif selon l'invention, montré en place sur un accès d'un boîtier d'épissurage simplement amorcé,
- la figure 2 est une vue en coupe selon la ligne II-II de la figure 1, montrant une face frontale dite avant du dispositif,
- la figure 3 est une vue en coupe longitudinale d'un support d'amarrage d'un câble à fibres optiques, du dispositif de la figure 1,
- la figure 4 est une vue de desssus de ce support d'amarrage,
- la figure 5 est une vue, selon la flèche V de la figure 4, de la face frontale avant non équipée du support d'amarrage,
- la figure 6 est une vue en coupe, du support non équipé, faite selon la ligne brisée VI-VI de la figure 4,
- la figure 7 est une vue en coupe du dispositif selon la figure 1, ayant intérieurement deux supports d'amarrage de deux câbles,
- la figure 8 est une vue en coupe du dispositif ayant un seul support d'amarrage d'un seul câble sensiblement centré dans le dispositif,
- la figure 9 est une vue correspondant à la figure 2, pour le dispositif maintenant un seul câble conformément à la figure 8,
- les figures 10 et 11 correspondent aux figures 8 et 9, pour l'utilisation du dispositif avec trois câbles sur leur support individuel d'amarrage,
- la figure 12 est une vue en coupe de la partie terminale arrière du dispositif, pour une variante d'exécution de l'étanchéité à ce niveau, donnée par rapport à la figure 1,
- la figure 13 et la figure 14 sont une vue de côté et une vue en coupe selon la ligne XIV-XIV de la figure 12 du moyen d'étanchéité de la figure 12,
- les figures 15 et 16 sont une vue de dessus d'un corps de boîtier d'épissurage ouvert et équipé et une vue de côté du boîtier d'épissurage fermé.

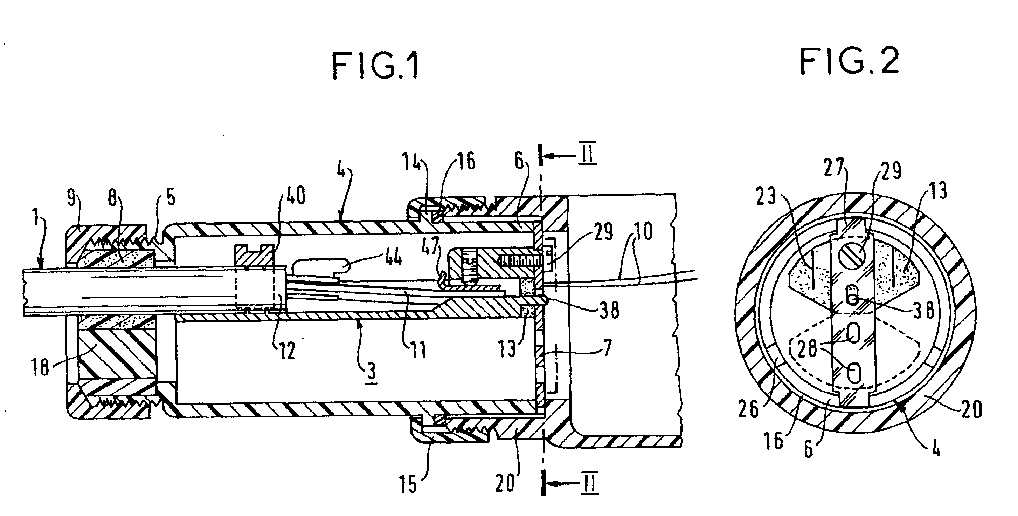

En se référant à la figure 1, on voit que le dispositif représenté assure le maintien d'un seul câble 1 à fibres optiques 10 et est fixé extérieurement à un boîtier 2, sur un accès 20 de ce boîtier. On indique qu'il est cependant conçu pour assurer le maintien possible de plusieurs câbles à fibres optiques et ainsi le maintien de ces câbles dans le même accès de boîtier, ainsi qu'il sera précisé par la suite.

Le dispositif représenté dans la figure 1 comporte un support d'amarrage 3 du câble 1 et une tubulure extérieure 4, celle-ci contenant le support sur lequel le câble 1 est immobilisé. Cette tubulure est affectée à la réception possible de plusieurs supports tels que le support 3 et est de forme cylindrique. Elle est ouverte à ses deux extrémités, pour le passage du seul câble 1 reçu dans sa partie terminale arrière 5 et la sortie des fibres optiques 10 de câble à travers sa partie terminale avant 6.

Ce dispositif comporte également une cale avant 7, fixée en bout du support d'amarrage, sur l'extrémité dite avant de celui-ci et reçu dans l'ouverture avant de la tubulure. Cette cale assure le positionnement et le blocage en rotation du support d'amarrage 3 dans cette ouverture avant.

Le dispositif comporte en outre un joint presse-étoupe 8, qui est traversé par le câble 1 et est bloqué dans l'ouverture arrière de la tubulure et sur le câble 1 par un écrou 9 vissé sur l'extrémité arrière filetée de la tubulure. Ce joint assure le positionnement du câble dans l'ouverture arrière et l'étanchéité à ce niveau.

Le câble 1 comporte un porteur central 11, une pluralité de fibres 10 autour du porteur et une gaine extérieure de protection 12. Il comporte, en général en outre, de manière bien connue, d'autres éléments non représentés ou non référencés dans la figure 1 pour éviter des surcharges. Ainsi par exemple, le câble peut comporter un jonc rainuré monté sur le porteur central ou le constituant en même temps, des tubes de protection des fibres individuelles ou de plusieurs fibres, un moyen de maintien des fibres dans les rainures du jonc ou autour du porteur, et des moyens périphériques de renfort, de préférence fibreux et sous forme de mèches, entre la gaine extérieure et les fibres.

Le câble gainé est immobilisé sur une partie arrière du support 3, tandis que le porteur du câble dégainé est arrêté et retenu sur une partie avant de ce support. Ses fibres nues 10 s'étendent librement au-delà de la partie avant du support à travers l'ouverture avant de la tubulure contenant le support sur lequel le câble 1 a été préalablement amarré.

Un patin 13, en mousse, est interposé entre l'extrémité avant du support et la cale 7 fixée sur cette extrémité avant. Il est fendu par le passage des fibres nues.

Pour le montage de la tubulure 4 dans l'accès 20 du boîtier 2, un épaulement périphérique 14, dit avant mais non terminal sur la tubulure, limite l'insertion de la tubulure dans cet accès. L'accès 20 est bien entendu cylindrique et de diamètre intérieur juste supérieur à celui extérieur de la partie avant de la tubulure mais inférieur au diamètre extérieur de l'épaulement 14. Il est fileté extérieurement. Un écrou 15, monté coulissant entre les parties arrière et avant de la tubulure et dont la tête arrière annulaire se bloque sur l'arrière de l'épaulement, se visse sur l'accès 20 et assure le blocage de la tubulure dans l'accès. Un joint 16, retenu contre l'épaulement 14, à l'avant de celui-ci, est serré entre l'épaulement 14 et le bout périphérique de l'accès 20 avec le serrage de l'écrou 15 et assure l'étanchéité de la tubulure dans l'accès 20.

La figure 2 montre que le patin 13 présente deux fentes 23 pour le passage des fibres nues.

En regard de cette figure 2 et/ou de la figure 1, on voit en outre que la partie avant de la tubulure présente des encoches 26 dont deux d'entre elles sont diamétralement opposées et reçoivent la cale avant 7 précitée.

Cette cale 7 est une barrette plate et rectangulaire. Elle est de longueur légèrement supérieure au diamètre intérieur de l'ouverture avant de la tubulure. Elle est de largeur supérieure à celle des encoches 26 sauf sur ses deux portions terminales qui définissent deux pattes opposées 27, ayant sensiblement la même largeur que les encoches et reçues dans les deux encoches diamètralement opposées.

Cette cale 7 est fixée sur le support 3 avec un léger jeu possible de l'un transversalement à l'autre. Elle présente des trous oblongs tels que 28, le long de son axe longitudinal, dont deux d'entre eux sont utilisés pour cette fixation. L'un des trous reçoit une vis de fixation 29 engagée dans le support 3 tandis qu'un autre des trous reçoit un ergot cylindrique de positionnement 38, prévu sur la face frontale avant du support.

Les pattes terminales 27 sont en appui sur le fond des deux encoches opposées de la tubulure quand le support 3 portant le câble 1 est en place dans la tubulure. Elles sont ainsi maintenues dès lors que l'écrou arrière 9 est bloqué sur la partie arrière de la tubulure et contre le presse-étoupe traversé par le câble gainé et s'oppose alors à la translation du support dans la tubulure.

La figure 1 montre que le presse étoupe 8, qui est traversé par le câble gainé 1, présente un autre passage de câble, non utilisé et fermé par un bouchon 18.

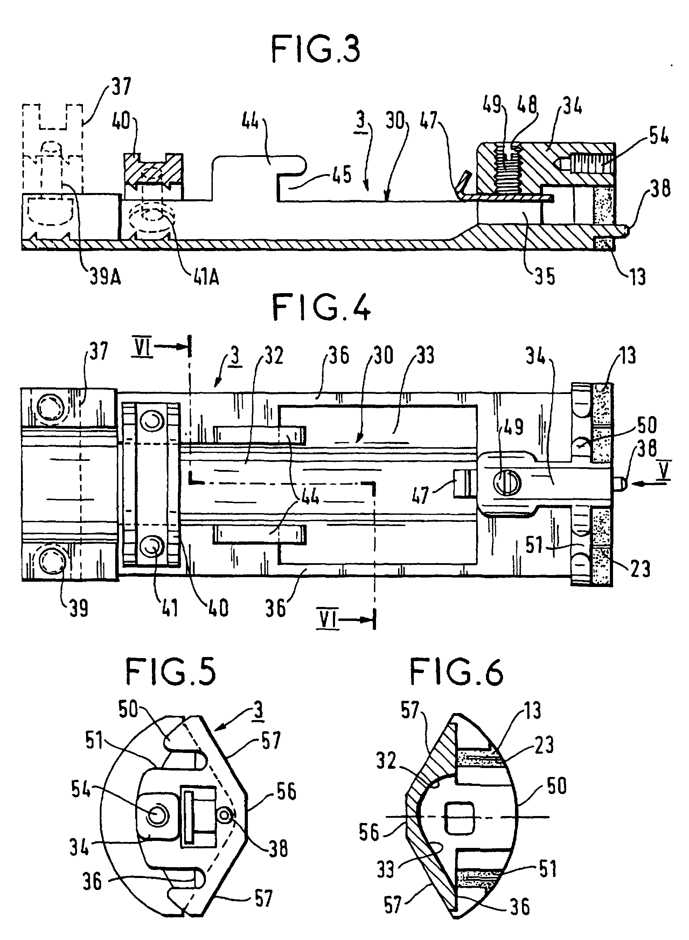

Le support d'amarrage 3 est décrit en se référant plus particulièrement aux figures 3 à 6.

Il est constitué par une pièce allongée, de section droite ayant sensiblement la forme d'un trapèze isocèle dont la grande base est échancrée sur la plus grande partie de la longueur du support. Sa plus grande face 30, qui correspond à la grande base de la section trapézoïdale, définit la face d'amarrage du câble. Elle est échancrée axialement, depuis l'extrémité arrière à la partie terminale avant du support, pour définir un berceau arrière 31, un berceau intermédiaire 32 et un berceau quasi-avant 33, à la suite les uns des autres. La partie terminale avant présente quant à elle une large nervure avant 34, saillante axialement sur la face d'amarrage et perçée d'un canal 35, lui même axial. Deux méplats longitudinaux 36, plans et sensiblement de même niveau, sont prévus de part et d'autre des berceaux et de la nervure avant.

Le berceau arrière 31 est de section sensiblement semi-circulaire, qui est adaptée à celle du câble gainé de plus grosse section pouvant être reçu sur le support. Un tel câble gainé de plus grosse section est immobilisé dans ce berceau arrière 31 à l'aide d'une première bride 37, rapportée sur le berceau arrière et fixée de part et d'autre sur les deux méplats 36 à ce niveau, à l'aide de deux vis latérales 39 insérées à travers deux trous correspondants 39A prévus dans les méplats et vissées dans ces brides.

Le berceau intermédiaire 32 est de section également semi-circulaire et est affecté d'une part à l'immobilisation d'un câble gainé de section dite moyenne ou petite reçu sur le support et d'autre part à l'arrêt des éventuelles mèches de renfort du câble dégainé.

Il reçoit, pour sa première fonction d'immobilisation du câble gainé concerné, une deuxième bride 40, adaptée à ce câble et fixée de part et d'autre sur les deux méplats 36 à ce niveau à l'aide de deux vis 41 reçues à travers deux trous correspondants 41A dans ces méplats et vissées dans les parties latérales de cette bride.

Il présente, pour sa deuxième fonction d'arrêt des mèches du câble, de section quelconque, qui est dégainé juste au-delà de son immobilisation, deux ailettes 44, saillantes sur les méplats 36 et situées entre ces méplats et le berceau intermédiaire. Les mèches libérées du câble dégainé sont bobinées autour de ce deux ailettes. Une encoche 45, réalisée dans l'extrémité avant de chaque ailette sur une partie de sa hauteur et ouverte du côté du berceau quasi-avant 33, reçoit les mèches pour leur retenue. Les extrémités des mèches bobinées sont bloquées sous la bride d'immobilisation 37 ou 40 du câble gainé.

Le berceau quasi avant 33 est de section sensiblement en V à fond arrondi et dont l'ouverture est plus évasée que celle des deux berceaux précédents 31 et 32. Il reçoit les fibres 10 qui sont éventuellement protégées dans leurs tubes puis mises à nu à ce niveau, ainsi que le porteur central 11 du câble.

La nervure avant 34 est affectée au blocage du porteur central. Elle reçoit dans son canal 35 l'extrémité du porteur, sectionné en conséquence, ainsi qu'un plat 47 ou autre pièce convenable d'appui sur le porteur pour son blocage. Elle présente un trou fileté 48 débouchant transversalement dans le canal et recevant une vis 49 de serrage et de blocage du porteur dans le canal.

Un épaulement terminal semi-circulaire 50 relie les extrémités avant des méplats 36 au dos de la nervure 34. Deux encoches 51 relativement larges et profondes sont prévues dans cet épaulement 50 et ouvertes sur sa périphérie, de part et d'autre de la nervure, pour le passage des fibres du câble immobilisé sur le support.

Le patin mousse 13 en place contre la face frontale avant du support 3 a ses deux fentes centrées sur l'axe de chacune des encoches 51 et maintient les fibres sans les blesser.

La figure 4 montre en particulier que la nervure 34 est légèrement saillante à l'avant du support sur l'épaulement 50. Ceci permet l'encastrement du patin de part et d'autre de la partie saillante avant de la nervure contre l'épaulement 50. Le patin est échancré pour venir de part et d'autre de la nervure et est positionné sur l'ergot 38 lui-même saillant sur la face frontale avant, sensiblement à l'opposé de la nervure.

Les figures 3 et 5 montrent en outre qu'un trou fileté 54, ouvert sur la face frontale avant, est prévu dans la nervure 34, parallèlement au canal, entre ce canal et le dos de la nervure. Ce trou 54 sert à la fixation de la cale avant, non représentée, venant ainsi assurer le maintien en place du patin 13.

Pour compléter la description de ce support 3, on a désigné sa petite face opposée à celle d'amarrage par la référence 56 et l'une ou l'autre de ses deux faces latérales en biais par la référence 57, dans les figures 5 et 6. Ces faces 56 et 57 sont planes et forment entre elles des pans inclinés permettant l'accolage de plusieurs supports dans la tubulure.

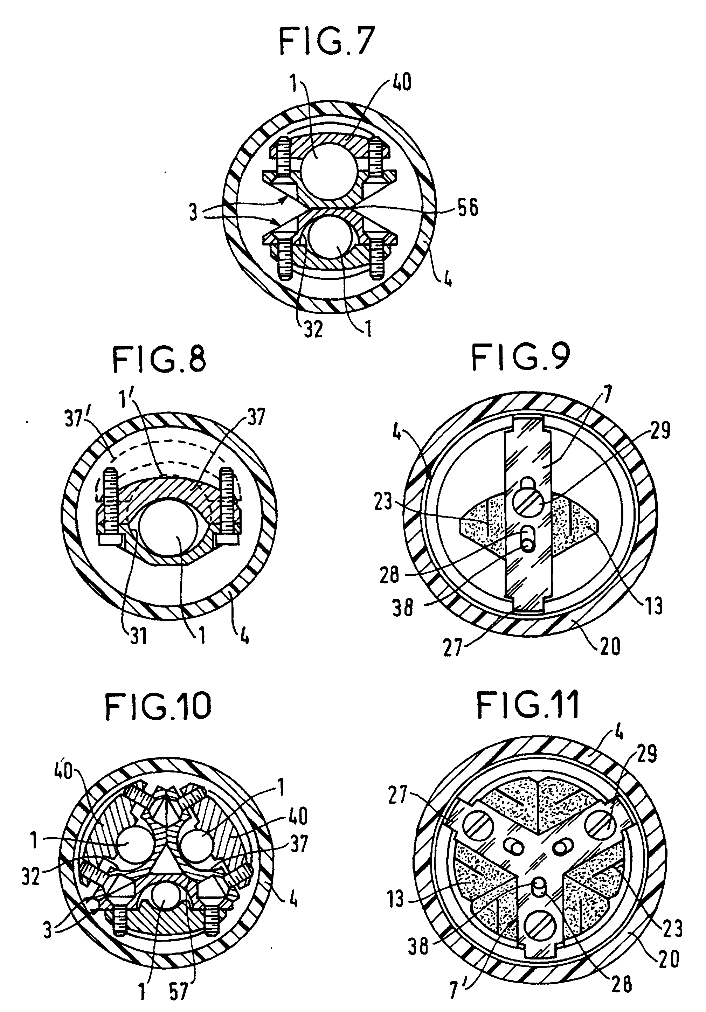

En se référant aux figures 7, 8 et 10, on voit que la largeur de la face d'amarrage ou du support lui-même est nettement inférieure au diamètre intérieur de la tubulure 4 et que cette tubulure peut recevoir intérieurement un, deux ou trois supports identiques désignés sous la même référence 3 précités, avec un câble immobilisé sur la face d'amarrage de chaque support. Les câbles immobilisés sur les différents supports sont analogues au câble 1 précité et sont désignés sous cette même référence quelle que soit leur section, pouvant être différente d'un câble à un autre.

La figure 7 montre deux supports 3 et leurs deux câbles 1, dans la tubulure 4. Ces deux supports sont accolés par leur petite base 56. Ainsi que montré dans la figure 2, dans laquelle le deuxième support 3 dans la tubulure a été illustré en pointillés, la cale 7 en forme de barrette est fixée aux deux supports sur leur extrémité avant et les bloque dans l'ouverture avant de la tubulure. En regard de la figure 1, on comprend aisément que le deuxième cable traverse le joint presse-étoupe 8, dont le bouchon 18 montré le passage pour ce deuxième cable a été retiré, et que les deux câbles sont bloqués dans l'ouverture arrière de la tubulure 4. Les deux câbles ainsi maintenus sont de petite ou moyenne section et sont immobilisés gainés dans le berceau intermédiaire 32 de la face d'amarrage, chacun par la bride 40 correspondante.

Les figures 8 et 9 montrent que le support unique 3 portant son câble 1 est sensiblement axial dans la tubulure 4. La cale 7, sous forme de barrette, est fixée sur le bout du support en utilisant ses deux trous médians 28 pour le maintien sensiblement central du support dans l'ouverture avant de la tubulure. on utilise alors dans l'ouverture arrière de la tubulure un joint presse étoupe à un seul passage prévu pour le positionnement et le maintien du seul câble, à ce niveau. Le câble sur le support ainsi monté dans la tubulure peut être de petite ou moyenne section. Il est de préférence, comme représenté, de grosse section et est alors immobilisé gainé dans le berceau arrière 31 à l'aide de la bride 37.

On a en outre fait apparaître en pointillés sur la figure 8 la section maximale possible 1' du cable gainé pouvant être immobilisé dans le berceau 37 et la position correspondante 37' prise par la bride.

Les figures 10 et il montrent trois supports 3 portant leur câble 1, qui sont montés dans la tubulure 4. Ces supports sont deux à deux accolés par leurs faces latérales 57. Ils sont ainsi maintenus et bloqués dans l'ouverture avant de la tubulure par une cale frontale notée 7'. Cette cale 7' est plate et présente une forme d'étoile, à trois bras radiaux dans l'ouverture avant. Deux trous 28' sont prévus dans chacun des bras radiaux de cette cale, pour sa fixation aux trois supports. Une patte terminale 27' est prévue sur chaque bras. Les trois pattes résultantes 27' sont reçues dans trois des encoches 26 de l'extrémité avant de la tubulure, ces trois encoches étant prévues à 120° les unes des autres, comme les trois bras de la cale. Le joint presse-étoupe dans l'ouverture arrière de la tubulure est adapté aux trois câbles 1 sur ces trois supports pour le maintien des câbles et l'étanchéité au niveau de l'ouverture arrière. Ces trois câbles sont de section relativement faible et immobilisés dans le berceau 32 du support correspondant 3.

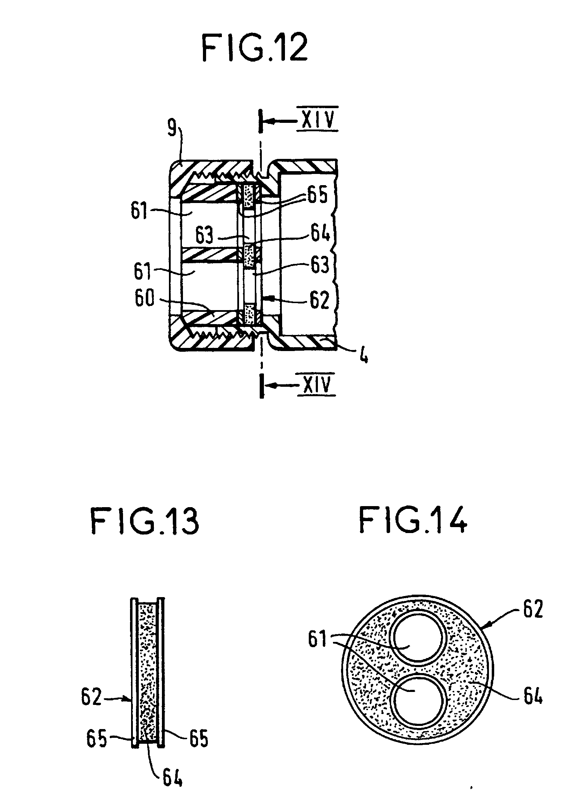

Les figures 12 à 14 montrent une variante de réalisation, donnée par rapport au presse étoupe précité et prévue pour le positionnement de deux câbles dans l'ouverture arrière de la tubulure 4 et de l'étanchéité à ce niveau.

Dans cette variante, les moyens de fermeture étanche de la partie arrière de la tubulure 4, autour de deux câbles pour la réalisation illustrée, comportent un joint de guidage 60, assurant essentiellement le positionnement de ces deux câbles dans l'ouverture arrière et présentant deux passages 61 pour ces câbles, et un ensemble d'étanchéité 62 associé. Cet ensemble d'étanchéité 62 est percé pareillement de deux passages 63 pour les deux câbles. Il est constitué par un joint 64 en mastic, en particulier en butyl ou analogue, entre deux rondelles métalliques 65. Cet ensemble d'étanchéité est accolé au joint 60 contre sa face tournée vers l'intérieur de la tubulure.

Le joint 64 permet un fluage important de sa matière sur la périphérie de l'ensemble et sur les deux câbles lors de l'écrasement de cet ensemble obtenu avec le serrage à fond de l'écrou arrière 9 sur la tubulure, pour une très bonne étanchéité à ce niveau.

Bien entendu, un autre joint tel que le joint 60 et un autre ensemble d'étanchéité tel que 61 sont prévus pour le maintien et l'étanchéité d'un seul câble ou de trois câbles au niveau de cette ouverture arrière de la tubulure et présentent en conséquence un seul ou trois passages pour le ou les câbles concernés.

Les passages non utilisées, lorsque la tubulure est sous équipée, sont bouchés.

Le joint d'étanchéité 64 entre les deux rondelles est changé à chaque dévissage de l'écrou arrière. Il présente le nombre de passages qui correspond au nombre de câbles reçus dans la tubulure.

Le dispositif selon l'invention assure le maintien de 1 à 3 câbles à fibres optiques, selon la section du ou des câbles, et intègre directement l'étanchéité du ou des câbles qu'il affecte à un même accès de boîtier d'épissurage. Son montage réalisé sur l'extérieur du boîtier et son démontage sont rapides et aisés et évitent l'utilisation d'outil à l'intérieur du boîtier. Il peut être sous équipé initialement comme montré dans la figure 1 et être complété le cas échéant ultérieurement. Il est utilisable sur différents types de boîtier de raccordement ayant au moins une paire d'accès tubulaires sur lesquels se raccordent extérieurement deux dispositifs de maintien de câbles à fibres optiques.

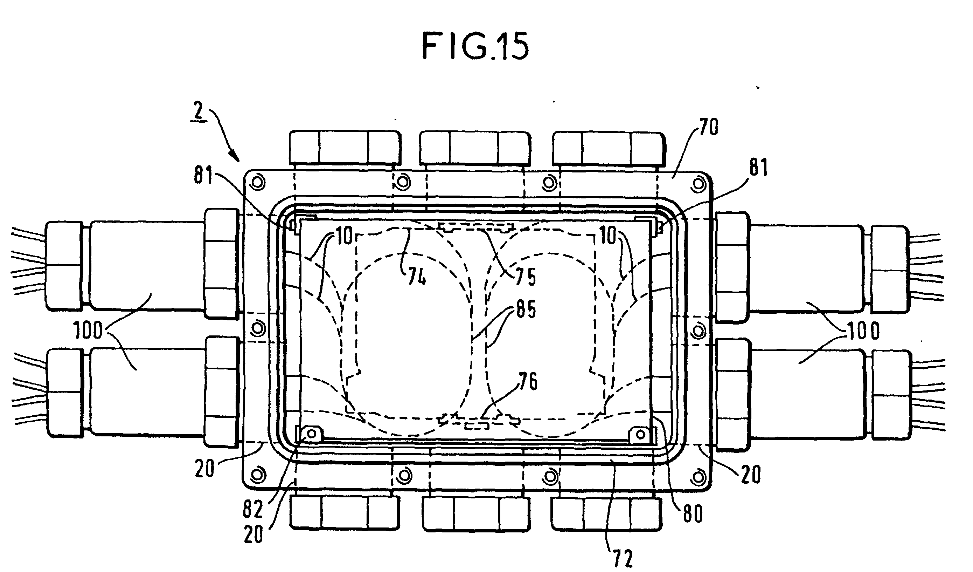

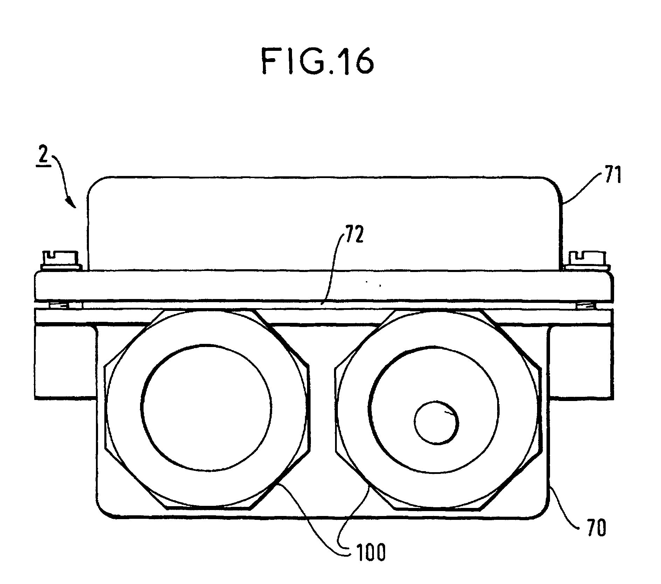

Les figures 15 et 16 montrent un exemple de réalisation d'un tel boîtier d'épissurage, de capacité maximale optimisée pour des dimensions données du boîtier.

Ce boîtier, désigné globalement sous la référence 2 précitée, comporte un corps de boîtier 70 de forme parallélépipédique, dont l'une des deux grandes faces rectangulaires, dite face supérieure, est ouverte et est fermée par un couvercle 71 rapporté et vissé sur la périphérie de la face supérieure du corps. Un joint 72 sensiblement sur la périphérie de cette face assure l'étanchéité entre le corps et le couvercle.

Le corps 70 porte des cassettes de lovage et d'épissurage 74, qui sont superposables les unes sur les autres, sont liées les unes aux autres d'un premier côté par un ensemble d'articulation 75 des cassettes individuelles et sont verrouillables les unes sur les autres du côté opposé au premier par un ensemble de verrouillage 76 des cassettes individuelles.

Dans cette réalisation, avantageusement, l'empilement de cassettes est monté sur un volet support 80, lui-même articulé sensiblement le long de l'un des bords internes de la face supérieure du corps, pour être ouvrant et permettre l'accès aux cassettes ou être rabattu sur le corps et maintenir les cassettes dans et/ou au-dessus du corps. Il est prévu deux cornières d'articulation 81 et deux cornières d'appui 82, pour le volet 80, à l'intérieur du corps et au moins sur sa hauteur, aux deux extrémités de deux parois latérales opposées de ce corps.

Cet empilement de cassettes est sous le volet 80 considéré rabattu sur le corps. Il laisse un espace libre dans le fond du corps, qui est affecté au lovage d'une partie des surlongueurs de fibres reçues dans le boîtier. Ce lovage dans le fond du corps est réalisé en deux boucles 85, pour les deux ensembles de fibres reçues à travers deux côtés opposés du corps 70, les boucles étant retenues par des moyens convenables, non représentés.

Le corps 70 présente deux accès sur chacun de ses deux petits côtés et trois accès sur chacun de ses deux grands côtés, ces accès étant tous identiques à l'accès 20 du boîtier montré dans la figure 1 et étant désignés sous cette même référence 20 précitée.

Ces accès donnent la possibilité d'utiliser quatre ou six dispositifs de maintien de câbles à fibres optiques suivant les côtés utilisés.

Dans l'exemple illustré, le boîtier est équipé de quatre dispositifs 100 tels que celui décrit ci-avant en regard des figures 1 à 15, montés sur les accès des petits côtés. Les accès non utilisés des grands côtés sont quant à eux fermés de manière étanche par un bouchon 101 vissé sur chacun d'eux de manière analogue à l'écrou avant du dispositif. Ce bouchon 101 non percé est équipé de moyens d'étanchéité de l'accès fermé non utilisé.

Bien entendu il est possible de n'utiliser qu'un des deux accès de chaque petit côté, ou un, deux ou trois des trois accès de chaque grand côté et de fermer de manière étanche les accès non utilisés. Le boîtier est en conséquence sous-équipé ou non indépendamment des tubulures elles-mêmes sous équipées ou non.

Bien entendu également, au lieu de prévoir des accès sur les quatre côtés du boîtier, on peut prévoir des accès sur deux côtés opposés et des empreintes d'accès, à découper et à munir d'embout individuel de raccordement du dispositif 100, sur les deux autres côtés.

En variante par rapport aux figures 15 et 16, on indique que le boîtier de raccordement peut prendre différentes formes possibles ayant au moins deux accès opposés pour deux dispositifs de maintien des câbles à fibres optiques à raccorder.

Ainsi pour le raccordement direct en ligne de deux câbles, ce boîtier peut être constitué par un corps tubulaire qui reçoit intérieurement un simple support de raccords d'épissurage des fibres des deux câbles et dont les extrémités forment les accès pour les deux dispositifs de maintien de l'un et l'autre de ces deux câbles.

Ainsi également le boîtier peut être un corps parallélépipédique, en deux parties assemblables l'une à l'autre, qui protège directement un simple support, à double face de lovage des fibres optiques et de maintien des raccords d'épissurage, et qui reçoit par deux accès opposés deux dispositifs de maintien des câbles concernés.

Le boîtier de raccordement illustré dans les dessins et décrit ci-avant et les variantes de réalisation indiquées uniquement à titre d'exemples mettent directement en évidence les facilités et les possibilités d'utilisation du dispositif sur différents types de boites d'épissurage.

## Revendications

1. Dispositif de maintien d'au moins un câble à fibres optiques, comportant pour chaque câble un support d'amarrage sur lequel le câble correspondant est immobilisé sur une face d'amarrage du support et a ses fibres libres sur une extrémité avant dudit support, **caractérisé en ce qu'**il comporte :
- une tubulure cylindrique (4), affectée au montage intérieur de chaque câble (1) préalablement immobilisé sur son support d'amarrage (3) et prévue de longueur sensiblement supérieure à celle de chaque support d'amarrage, dans laquelle chaque câble (1) est reçu dans une partie terminale arrière (5) de la tubulure et de laquelle chaque fibre (10) sort à travers une partie terminale avant (6) de la tubulure,
- des moyens avant de calage (7, 7'), assurant le positionnement et le blocage en rotation de chaque support d'amarrage (3) dans ladite partie terminale avant de ladite tubulure,
- des moyens de fermeture (8, 60, 62, 9) de la partie arrière de la tubulure, autour de chaque câble reçu dans ladite tubulure, et
- des moyens avant de fixation étanche (14, 15, 16) de ladite tubulure (4) sur un accès (20) d'un corps de boîtier (2), de sorte que les fibres entrent dans le boîtier par cet accès.

2. Dispositif selon la revendication 1, **caractérisé en ce que** le support d'amarrage (3) de chaque câble est constitué par une pièce allongée présentant une grande face (30), échancrée axialement sur une partie de la longueur de ladite pièce et définissant la face d'amarrage, et plusieurs petites faces planes (56, 57) définissant entre elles des pans inclinés de montage accolé de plusieurs supports dans ladite tubulure (4).

3. Dispositif selon la revendication 2, **caractérisé en ce que** ledit support (3) est de section droite ayant sensiblement la forme d'un trapèze isocèle, dont la grande base est échancrée depuis une extrémité arrière à une partie terminale avant.

4. Dispositif selon la revendication 3, **caractérisé en ce que** ladite face d'amarrage (30) présente un berceau arrière (31) et un berceau intermédiaire (33), à la suite l'un de l'autre, affectés sélectivement à l'immobilisation du câble, selon la section de ce câble, et associés chacun à une bride (37, 40) d'immobilisation de ce câble.

5. Dispositif selon l'une des revendications 3 et 4, **caractérisé en ce que** ledit support (3) comporte une nervure terminale avant (34), saillante axialement sur la partie terminale avant de la face d'amarrage et percée longitudinalement d'un canal (35), ledit canal étant affecté au blocage d'un porteur central appartenant au câble immobilisé sur ledit support.

6. Dispositif selon l'une des revendications 2 à 5, **caractérisé en ce que** ledit support (3) présente un épaulement terminal semi-circulaire avant (50), saillant sur ladite face d'amarrage et percé d'encoches périphériques (51) pour le passage des fibres du câble immobilisé sur le support.

7. Dispositif selon la revendication 6, **caractérisé en ce qu'**il comporte en outre un patin mousse avant (13) maintenu contre ledit épaulement semi-circulaire avant et percé de fentes (23) centrées sur lesdites encoches périphériques de passage desdites fibres.

8. Dispositif selon l'une des revendications 6 et 7, **caractérisé en ce que** lesdits moyens de calage comportent une cale frontale en forme de barrette plate, prévue de longueur supérieure au diamètre intérieur de ladite tubulure (4) et affectée au blocage dans l'extrémité avant de ladite tubulure d'un seul ou de deux supports accolés symétriquement l'un à l'autre, et **en ce que** ladite tubulure présente au moins deux encoches avant (26), diamétralement opposées l'une à l'autre, recevant les extrémités de ladite barrette.

9. Dispositif selon l'une des revendications 6 à 7, **caractérisé en ce que** lesdits moyens de calage comportent une cale frontale en forme de pièce plate (7') en étoile, à trois bras radiaux prévus de longueur supérieure au rayon intérieur de ladite tubulure et affectés au blocage dans l'extrémité avant de la tubulure de trois supports (3) accolés deux à deux, et **en ce que** ladite tubulure présente au moins trois encoches avant (26) recevant les extrémités des trois bras.

10. Dispositif selon l'une des revendications 8 et 9, **caractérisé en ce que** ladite cale (7, 7') présente des couples de trous oblongs (28, 28'), pour son positionnement et sa fixation sur chaque support (3), avec un jeu transversal possible de chaque support relativement à la dite cale.

11. Dispositif selon la revendication 1, **caractérisé en ce que** lesdits moyens de fermeture (8, 9) de la partie arrière de la tubulure (4) comportent un joint presse étoupe (8) et un écrou arrière (9) de serrage dudit joint presse-étoupe dans l'ouverture arrière de la tubulure et autour de chaque câble.

12. Dispositif selon la revendication 1, **caractérisé en ce que** lesdits moyens de fermeture (60, 62, 9) de la partie arrière de la tubulure (4) comportent un joint de guidage (60) de chaque câble reçu dans la tubulure, un ensemble d'étanchéité (62) associé audit joint de guidage, et un écrou arrière (9) de serrage dudit joint de guidage et dudit ensemble d'étanchéité dans l'ouverture arrière de la tubulure et autour de chaque câble, et **en ce que** ledit ensemble d'étanchéité comporte lui-même un joint en matériau fluant entre deux rondelles rigides.

13. Boîtier d'épissurage faisant application de dispositifs selon l'une des revendications 1 à 12 et comportant un corps de boîtier et au moins deux accès opposés sur ledit corps pour les câbles à fibres optiques, **caractérisé en ce que** chaque dispositif est extérieur audit corps.

14. Boîtier d'épissurage selon la revendication 13, dans lequel ledit boîtier est de forme parallélépipédique, comporte le corps de boîtier prévu ouvert et ayant un fond et deux petites et deux grandes parois latérales, est fermé par un couvercle et est muni de plusieurs paires d'accès latéraux sur ledit corps, **caractérisé en ce que** lesdits accès (20) sont prévus sur les petites et grandes parois latérales dudit corps et sont équipés de dispositifs individuels (100) de maintien de câbles à fibres optiques, pour au moins certains des accès de deux des parois latérales opposés, et sont fermés par les autres accès.

15. Boîtier selon la revendication 14, comportant en outre des moyens internes de lovage de surlongueurs sur les fibres optiques et de maintien de raccords d'épissurage, **caractérisé en ce que** ledit corps comporte en outre des moyens de rétention, sensiblement sur le fond dudit corps, de boucles (85) de lovage desdites fibres.

## Patentansprüche

1. Befestigungsvorrichtung für wenigstens ein faseroptisches Kabel, welche für jedes Kabel einen Befestigungsträger umfasst, auf welchem das zugehörige Kabel auf einer Befestigungsseite des Trägers befestigt wird, das seine freien Fasern auf einem Vorderende des Trägers hat, **dadurch gekennzeichnet, dass** sie aufweist:
- ein zylindrisches Rohr (4), geeignet zur inneren Montage jedes Kabels (1), das zuvor auf seinem Befestigungsträger (3) befestigt wurde und mit einer Länge vorgesehen ist, die im wesentlichen größer ist als die der Befestigungsträger, in welchem jedes Kabel (1) in einem hinteren Endabschnitt (5) des Rohrs aufgenommen ist, von dem jede Faser (10) durch einen vorderen Endabschnitt (6) des Rohrs austritt,
- vordere Keilmittel (7, 7'), welche die Positionierung und die Drehfestigkeit jedes Stützträgers (3) in dem vorderen Endabschnitt des Rohrs gewährleisten,
- Mittel zum Verschließen (8, 60, 62, 9) des hinteren Abschnitts des Rohrs, um jedes in dem Rohr aufgenommenes Kabel herum, und
- vordere Mittel zur dichten Befestigung (14, 15, 16) des Rohrs (4) auf einem Eingang (20) eines Gehäuserumpfs (2), derart, dass die Fasern in das Gehäuse durch diesen Eingang eintreten.

2. Vorrichtung nach Anspruch 1, **dadurch gekennzeichnet, dass** der Befestigungsträger (3) jedes Kabels durch ein längliches Stück gebildet ist, welches eine große Seite (30), die auf einem Teil der Länge des Stücks axial ausgeschnitten ist und die Befestigungsfläche definiert, und mehrere kleine ebene Seiten (56, 57), die zwischen ihnen schräge Fächer zur Anbaumontage mehrerer Träger in dem Rohr (4) aufweist.

3. Vorrichtung nach Anspruch 2, **dadurch gekennzeichnet, dass** der Träger (3) einen Querschnitt mit im wesentlichen der Form eines gleichschenkligen Trapezes aufweist, dessen große Basis von einem hinteren Ende bis zu einem vorderen Endabschnitt ausgeschnitten ist.

4. Vorrichtung nach Anspruch 3, **dadurch gekennzeichnet, dass** die Befestigungsseite (30) aufeinanderfolgend einen hinteren Rundbogen (31) und einen zwischenliegenden Rundbogen (33) aufweist, die jeweils zum Festhalten des Kabels entsprechend des Querschnitts dieses Kabels geeignet sind und jeweils mit einem Flansch (37, 40) zum Festhalten dieses Kabels verbunden sind.

5. Vorrichtung nach einem der Ansprüche 3 und 4, **dadurch gekennzeichnet, dass** der Träger (3) eine vordere Endrippe (34) aufweist, welche axial auf den vorderen Endabschnitt der Befestigungsfläche vorspringt und longitudinal von einem Kanal (35) durchbohrt ist, welcher Kanal zum Feststellen eines Mittelträgers, der zu dem auf dem Träger festgehaltenen Kabel gehört, geeignet ist.

6. Vorrichtung nach einem der Ansprüche 2 bis 5, **dadurch gekennzeichnet, dass** der Träger (3) eine halbkreisförmige vordere Endschulter (50) aufweist, welche auf die Befestigungsfläche vorspringt und von peripheren Vertiefungen (51) für den Durchtritt der Fasern des auf dem Träger festgestellten Kabels durchbohrt ist.

7. Vorrichtung nach Anspruch 6, **dadurch gekennzeichnet, dass** sie ferner eine vordere Schaumstoffunterlage (13) aufweist, welche gegen die halbkreisförmige vordere Schulter gehalten und von zentrierten Schlitzen (23) auf den peripheren Vertiefungen zum Durchtritt der Fasern durchbohrt ist.

8. Vorrichtung nach einem der Ansprüche 6 und 7, **dadurch gekennzeichnet, dass** die Keilmittel einen frontalen Keil in Form eines flachen Stegs umfassen, dessen Länge größer als der Innendurchmesser des Rohrs (4) ist, und welcher zum Feststellen eines einzigen oder von zwei zueinander symmetrisch angeordneten Trägern in dem Vorderende des Rohrs geeignet ist, und dass das Rohr wenigstens zwei einander diametral gegenüberliegende vordere Vertiefungen (26) aufweist, welche die Enden des Stegs aufnehmen.

9. Vorrichtung nach einem der Ansprüche 6 bis 7, **dadurch gekennzeichnet, dass** die Keilmittel einen frontalen Keil in Form eines flachen sternförmigen Teils (7') umfassen, mit drei radialen Armen, deren Länge größer ist als der Innenradius des Rohrs und zum Feststellen der drei paarweise angeordneten Träger (3) in dem Vorderende des Rohrs geeignet sind, und dass das Rohr wenigstens drei vordere Vertiefungen (26) aufweist, welche die Enden der drei Arme aufnehmen.

10. Vorrichtung nach einem der Ansprüche 8 und 9, **dadurch gekennzeichnet, dass** der Keil (7, 7') Paare von Langlöchern (28, 28') aufweist, für seine Positionierung und seine Befestigung auf jedem Träger (3), mit einem möglichen Querspiel jedes Trägers relativ zum Keil.

11. Vorrichtung nach Anspruch 1, **dadurch gekennzeichnet, dass** die Mittel zum Verschließen (8, 9) des hinteren Abschnitts des Rohrs (4) eine Stopfbüchsendichtung (8) und eine hintere Mutter (9) zum Verklemmen der Stopfbüchsendichtung in der hinteren Öffnung des Rohrs und um jedes Kabel umfassen.

12. Vorrichtung nach Anspruch 1, **dadurch gekennzeichnet, dass** die Mittel zum Verschließen (60, 62, 9) des hinteren Abschnitts des Rohrs (4) eine Führungsdichtung (60) jedes in dem Rohr aufgenommenen Kabels, eine mit der Führungsdichtung verbundene Dichtanordnung (62), und eine hintere Mutter (9) zum Verklemmen der Führungsdichtung und der Dichtanordnung in der hinteren Öffnung des Rohrs und um jedes Kabel umfassen, und dass die Dichtanordnung ihrerseits eine Dichtung aus einem kriechenden Material zwischen zwei starren Scheiben umfasst.

13. Verbindungsgehäuse, welches von den Vorrichtungen nach einem der Ansprüche 1 bis 12 Gebrauch macht, mit einem Gehäuserumpf und wenigstens zwei auf dem Rumpf gegenüberliegende Eingänge für die faseroptischen Kabel, **dadurch gekennzeichnet, dass** jede Vorrichtung außerhalb des Rumpfs ist.

14. Verbindungsgehäuse nach Anspruch 13, bei welchem das Gehäuse in Form eines Spats vorliegt, einen offenen Gehäuserumpf mit einem Boden und zwei kleinen und zwei großen Seitenwänden umfasst, durch einen Deckel verschlossen und mit mehreren seitlichen Eingangspaaren auf dem Rumpf versehen ist, **dadurch gekennzeichnet, dass** die Eingänge (20) auf den kleinen und großen Seitenwänden des Rumpfs vorgesehen sind und, für wenigstens bestimmte Eingänge von zwei gegenüberliegenden Seitenwänden, mit individuellen Haltevorrichtungen (100) für die faseroptischen Kabel ausgestattet sind, und durch die anderen Eingänge verschlossen sind.

15. Verbindungsgehäuse nach Anspruch 14, welches außerdem innere Mittel zum Aufrollen von Überlängen auf den optischen Fasern und zum Halten von Spleißverbindungen umfasst, **dadurch gekennzeichnet, dass** der Rumpf ferner Mittel zum Festhalten, im wesentlichen auf dem Boden des Rumpfs, von Aufrollschleifen (85) der Fasern aufweist.

## Claims

1. A device for holding at least one optical fiber cable, the device including a fastening support for each cable, the corresponding cable being held stationary on a fastening face of the support and having its fibers disposed freely on a front end of said support, said device being **characterized in that** it includes:
a cylindrical thimble (4) inside which can be mounted each cable (1) that has previously been immobilized on its fastening support (3), the thimble being organized so that its length is significantly greater than the length of each fastening support, each cable (1) being received in a rear end portion (5) of the thimble and each fiber (10) leaving through a front end portion (6) of the thimble;
front wedge means (7, 7') for positioning each fastening support (3) in said front end portion of said thimble and for preventing each fastening support from rotating;
closure means (8, 60, 62, 9) for closing the rear portion of the thimble, around each cable received in said thimble; and
front sealed fixing means (14, 15, 16) for fixing said thimble (4) in sealed manner to an access (20) of a box body (2) so that the fibers enter the box via said access.

2. A device according to claim 1, **characterized in that** the fastening support (3) for fastening each cable is constituted by an elongate part having a large face (30), which is recessed axially over a portion of the length of said part and which defines the fastening face, and a plurality of small plane faces (56, 57) co-operating to define sloping surfaces for mounting a plurality of supports so that they touch one another inside said thimble (4).

3. A device according to claim 2, **characterized in that** the shape of the right cross-section of said support (3) is substantially an isosceles trapezium whose large base is recessed from a rear end to a front end portion.

4. A device according to claim 3, **characterized in that** said fastening face (30) has a rear cradle (31) and an intermediate cradle (33), one after the other, the two cradles being selectively assigned to holding the cable stationary, depending on the cross-section of the cable, each cradle being associated with a respective clamp (37, 40) for holding the cable stationary.

5. A device according to claim 3 or 4, **characterized in that** said support (3) is provided with a front end rib (34) projecting axially from the front end portion of the fastening face, and provided with a longitudinal channel (35), said channel being assigned to locking a central strength member belonging to the cable held stationary on said support.

6. A device according to any one of claims 2 to 5, **characterized in that** said support (3) has a semi-circular front end shoulder (50) projecting from said fastening face, and provided with peripheral notches (51) for passing the fibers from the cable held stationary on the support.

7. A device according to claim 6, **characterized in that** it further includes a foam front pad (13) held against said semi-circular front shoulder and provided with splits (23) centered on said peripheral notches for passing said fibers.

8. A device according to claim 6 or 7, **characterized in that** said wedge means include an end wedge in the form of a flat bar that is of length greater than the inside diameter of said thimble (4), and that is assigned to locking, in the front end of said thimble, a single support or two supports disposed symmetrically to and touching each other, and **in that** said thimble is provided with at least two front notches (26) that are diametrically opposite each other, and that receive the ends of said bar.

9. A device according to claim 6 or 7, **characterized in that** said wedge means include an end wedge in the form of a flat star-shaped piece (7') having three radial arms of length greater than the inside radius of said thimble, and assigned to locking, in the front end of the thimble, three supports (3) touching in pairs, and **in that** said thimble is provided with at least three front notches (26) for receiving the ends of the three arms.

10. A device according to claim 8 or 9, **characterized in that** said wedge (7, 7') is provided with pairs of oblong holes (28, 28') for positioning it and fixing it to each support (3), with clearance being provided to make it possible for each support to be displaced transversely relative to said wedge.

11. A device according to claim 1, **characterized in that** said closure means (8, 9) for closing the rear portion of the thimble (4) comprise a stuffing-box gasket (8) and a rear nut (9) for clamping said stuffing-box gasket in the rear opening of the thimble and around each cable.

12. A device according to claim 1, **characterized in that** said closure means (60, 62, 9) for closing the rear portion of the thimble (4) comprise a guide gasket (60) for guiding each cable received in the thimble, a sealing assembly (62) associated with said guide gasket, and a rear nut (9) for clamping said guide gasket and said sealing assembly in the rear opening of the thimble and around each cable, and **in that** said sealing assembly itself comprises a gasket made of a yielding material between two rigid washers.

13. A splice box using devices according to any one of claims 1 to 12 and including a box body and at least two opposite accesses on said body for the optical fiber cables, said splice box being **characterized in that** each device is outside said body.

14. A splice box according to claim 13, in which said box is rectangular, it includes the box body which is open and has a bottom, two small side walls and two large side walls, it is closed by a cover, and it is provided with a plurality of side accesses on said body, said splice box being **characterized in that** said accesses (20) are provided on the small and large side walls of said body, and at least some of the accesses on two opposite side walls are equipped with individual devices (100) for holding optical fiber cables, the other accesses being closed off.

15. A splice box according to claim 14, further including internal means for coiling the surplus lengths of optical fiber, and for holding splice connections, said splice box being **characterized in that** said body further includes retaining means for retaining coiled loops (85) of said fibers substantially on the bottom of said body.
